# EUROPEAN PATENT APPLICATION

(11) **EP 3 506 396 A1**
(43) Date of publication of application: **03.07.2019**
(21) Application number: 18275194.1
(22) Date of filing: 27.12.2018
(51) Int. Cl.: H01M 2/22, H01M 2/26, H01M 10/04, H01M 10/0585

(54) **BATTERY**

(30) Priority: 27.12.2017 CN 201711444373
(71) Applicant: Microvast Power Systems Co., Ltd., Huzhou, Zhejiang 313000 (CN)
(72) Inventor: DENG, Guoyou, Huzhou, Zhejiang 313000 (CN); WU, Yang, Huzhou, Zhejiang 313000 (CN)
(74) Representative: Haseltine Lake Kempner LLP

(57) **Abstract**

The present disclosure provides a battery (100). The battery (100) includes a case (110), and bare cells (120) located therein. Each bare cell (120) includes a first electrode (122), a second electrode (124) and a separator (126). The first electrode (122) includes a first empty-foil area (1221) and a first coating area (1222), each first coating area (1222) is divided into two independent parts (1223, 1224) by one first empty-foil area (1221). The separator (126) is sandwiched between adjacent first electrode (122) and second electrode (124) such that short circuit between the first electrode (122) and the second electrode (124) is prevented. At least two adjacent first electrodes (122) are laminated and welded together at the first empty-foil areas (1221). Two second electrodes (124) are located between two adjacent first electrodes (122) and disposed at both sides of the first empty-foil areas (1221) separately. The battery (100) of the present disclosure effectively improves the energy density thereof.

## Description

### FIELD OF THE INVENTION

The present disclosure relates to a battery.

### BACKGROUND OF THE INVENTION

The development of new energy vehicle technology has put forward higher requirements on cruising range and power performance of electric vehicles. As main power sources of the electric vehicles, battery modules are required to process higher energy density. Hence, increasing the energy density of the battery modules is a key issue which should be focused.

The battery module is a combination of battery cells laminated in series and in parallel. To increase the energy density of a battery module, one method is to increase grouping efficiency of the battery modules, which is generally achieved by lightweight design. However, it is difficult to balance reliability and economy during the lightweight design.

### SUMMARY OF THE INVENTION

The present disclosure provides a battery, which includes a case and several bare cells located within the case. Each bare cell includes a first electrode, a second electrode and a separator. The first electrode includes a first empty-foil area and a first coating area. The first coating area is divided into two independent parts by the first empty-foil area. The separator is located between adjacent first electrode and second electrode to avoid short circuit between the first electrode and the second electrode.

At least two first electrodes are laminated together, and the laminated first electrodes are connected together via the first empty-foil area. Two second electrodes are disposed between the two adjacent first electrodes, and the two second electrodes are located at both sides of the first empty-foil areas separately.

The laminated first electrodes are welded together at the first empty-foil area and are electrically connected to a first tab of a pouch battery or a first electrode terminal of a prismatic battery. The two second electrodes which are located between two adjacent first electrodes are insulated with each other.

The first electrode includes a foil and a slurry coating formed thereon. The first coating area is formed by applying the slurry coating onto the foil of the first electrode, and the first empty-foil area refers to an area without applying the slurry coating. The first empty-foil areas of the laminated first electrodes are welded together in a way of ultrasonic welding, in this way, the first empty-foil areas are electrically connected with each other after welding.

The second electrodes at one side of the first empty-foil area are electrically connected to a second tab or a second electrode terminal of the battery, meanwhile, the second electrodes at the other side of the first empty-foil areas are electrically connected to a third tab or a third electrode terminal of the battery.

A polarity of the first electrode is different from that of the second electrode. In one embodiment, the first electrode is a positive electrode, the second electrode is a negative electrode. In another embodiment, the first electrode is a negative electrode, the second electrode is a positive electrode.

The case is a pouch-like case packaged with aluminum plastic film or prismatic metal case.

In one embodiment of the present disclosure, the second electrode includes a second empty-foil area and a second coating area. Both the second empty-foil area and the second coating area are distributed along a lateral direction or a longitudinal direction of the second electrode. Meanwhile, the second empty-foil area is disposed at outer end of the second electrode.

The outer end of the second electrode refers to the end of the second electrode away from the first empty-foil area.

The second electrode includes a foil and a slurry coating formed thereon. The second coating area is formed by applying the slurry coating onto the foil of the second electrode, and the second empty-foil area refers to an area without applying the slurry coating.

In one embodiment of the present disclosure, the second empty-foil areas at one side of the first empty-foil area are welded together and electrically connected to the second tab or the second electrode terminal of the battery. Meanwhile, the second empty-foil areas at the other side of the first empty-foil area are welded together and electrically connected to the third tab or the third electrode terminal of the battery. Therefore, the second empty-foil areas which are welded together are electrically connected with one another.

In an embodiment of the present disclosure, the case is a prismatic case, which includes a top cover, a first electrode terminal, a second electrode terminal and a third electrode terminal, the first electrode terminal, the second electrode terminal and the third electrode terminal are located on the top cover, the first electrode terminal is electrically connected with the first empty-foil area, the second electrode terminal is electrically connected with the second empty-foil areas at one side of the first empty-foil area. The third electrode terminal is electrically connected with the second empty-foil areas at the other side of the first empty-foil area. The first electrode terminal is disposed between the second electrode terminal and the third electrode terminal. A first explosion relief valve is arranged between the first electrode terminal and the second electrode terminal, and a second explosion relief valve is arranged between the first electrode terminal and the third electrode terminal.

In an embodiment of the present disclosure, the separator covers the surface of the second coating area.

In one embodiment, the separator surrounds the second coating area for at least one round, forming an annular structure.

In one embodiment, the separator wraps around the surface of the second coating area for at least one round, forming an annular structure, the second coating area is accommodated in the annular structure. Because of this, the first electrode is separated from the second electrode, and short circuit between the first electrode and the second electrode is prevented.

In one embodiment of the present disclosure, the separator is a pouch-like structure, and coats the second coating area.

The second coating area is hermetic-packaged in the pouch-like structure of the separator, because of this, the second electrode is separated from the first electrode, and short circuit between the first electrode and the second electrode is prevented.

The second coating area is hermetic-packaged in the pouch-like structure of the separator, because of this, a composite unit of the second electrode and the separator is formed. In the composite unit, the second electrode and the pouch-like separator are adhered together by hot pressing.

In one embodiment of the present disclosure, two opposite sides of the second coating area are symmetrically coated, two opposite sides of the second empty-foil area of the second electrode are symmetrically uncoated.

In one embodiment of the present disclosure, two opposite sides of the first coating area are symmetrically coated, two opposite sides of the first empty-foil area are symmetrically uncoated.

In one embodiment of the present disclosure, the first empty-foil area is located in the middle of the first electrode, and the first coating area is divided into two identical parts by the first empty-foil area.

In one embodiment of the present disclosure, the first electrode is a negative electrode, the second electrode is a positive electrode.

The first electrode includes a foil and a slurry coating, the foil of the first electrode is copper foil, and the slurry coating of the first electrode is formed by a negative slurry; the second electrode includes a foil and a slurry coating, the foil of the second electrode is aluminum foil, and the slurry coating of the second electrode is formed by a positive slurry.

In another embodiment of the present disclosure, the first electrode is a positive electrode, the second electrode is a negative electrode.

The first electrode includes a foil and a slurry coating, the foil of the first electrode is aluminum foil, and the slurry coating of the first electrode is formed by a positive slurry; the second electrode includes a foil and a slurry coating, the foil of the second electrode is copper foil, the slurry coating of the second electrode is formed by a negative slurry.

In one embodiment of the present disclosure, the battery is a pouch cell. In another embodiment of the present disclosure, the battery is a prismatic cell.

The battery of the present disclosure has the following advantages:
First, two adjacent first electrodes are parallel to each other and are connected at the first empty-foil areas thereof, two second electrodes are located between the two adjacent first electrodes and are separately disposed at both sides of the first empty-foil area thereof. Because of this, laminated bare cells are formed within one case, each includes a first electrode, a second electrode and a separator. Further, within two laminated bare cells, the positive electrodes and the negative electrodes are laminated and are in parallel connection in same case. Long in short, the first electrode terminal and the case are shared by multiple bare cells. Hence, a weight ratio of the case in the battery is reduced, and an energy density of the battery is improved.
Second, since the laminated first electrodes are connected at the first empty-foil area thereof and are electrically connected to same first electrode terminal, in other words, the laminated bare cells share same electrode terminal, parallel connection of laminated bare cells is realized in the absence of busbar assembly. Being lack of busbar assembly also helps improve the energy density of the battery module.
Third, the first empty-foil areas of the present disclosure are welded together such that the battery can dissipate heat through the welded first empty-foil areas welded together, which is advantageous to improve the heat dissipation capability of the first electrode.

### BRIEF DESCRIPTION OF THE DRAWINGS

FIG. 1 is an enlarged cross-sectional view of the battery.
FIG. 2 is an enlarged explosive schematic view of the battery assembly process.
FIG. 3 is a schematic view of a first electrode.
FIG. 4 is a schematic view of a second electrode.
FIG. 5 is a schematic view of the second electrode and a separator.
FIG. 6 is a perspective view showing the connection state of a first empty-foil area and a second empty-foil area.
FIG. 7 is a schematic view of a top cover structure.
FIG. 8 is an enlarged schematic view of portion A in FIG. 2.

### DETAILED DESCRIPTION OF PREFERRED EMBODIMENTS

Embodiments of the present disclosure will now be described more apparently and completely with reference to the embodiments. Obviously, the illustrated embodiments are only a part but not all of the embodiments of the present disclosure. All the other embodiments which could be obtained without creativity by one of ordinary skill in the art according to the illustrated embodiments would be claimed within the scope of the present disclosure.

### Embodiment 1

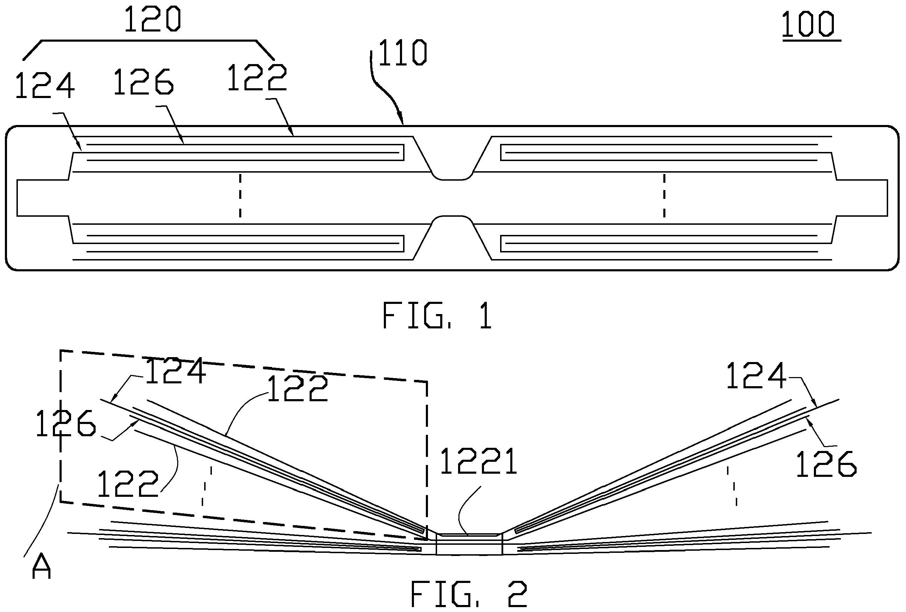

As shown in FIGs. 1 and 2, a battery 100 is provided in this embodiment. The battery 100 includes a case 110 and several bare cells 120 located within the case 110. Each bare cell 120 includes a first electrode 122, a second electrode 124 and a separator 126, the separator 126 is located between adjacent first electrode 122 and second electrode 124. Because of this, short circuit between the first electrode 122 and the second electrode 124 is prevented. As shown in FIG. 1, the separator 126 is folded to define a space, and the second electrode 124 is accommodated therein.

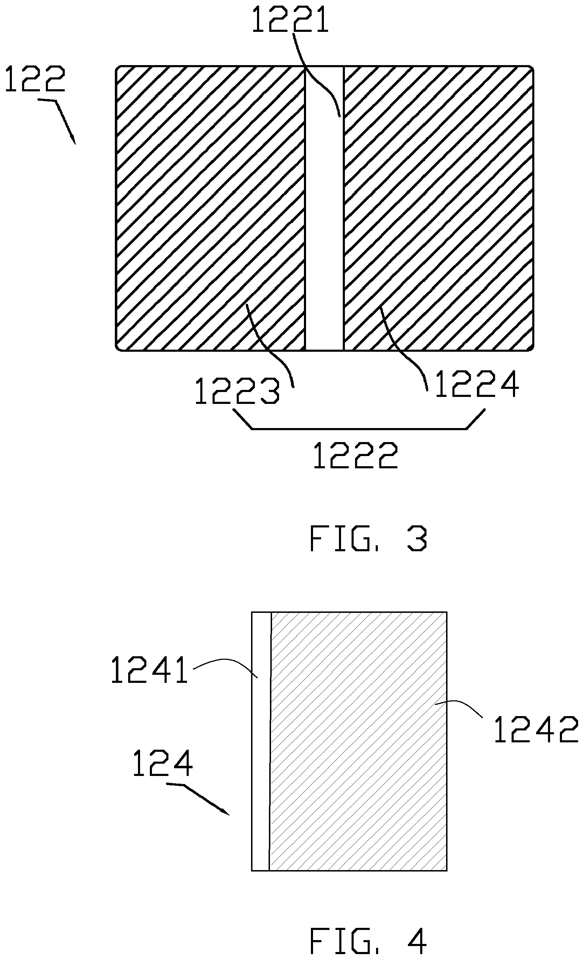

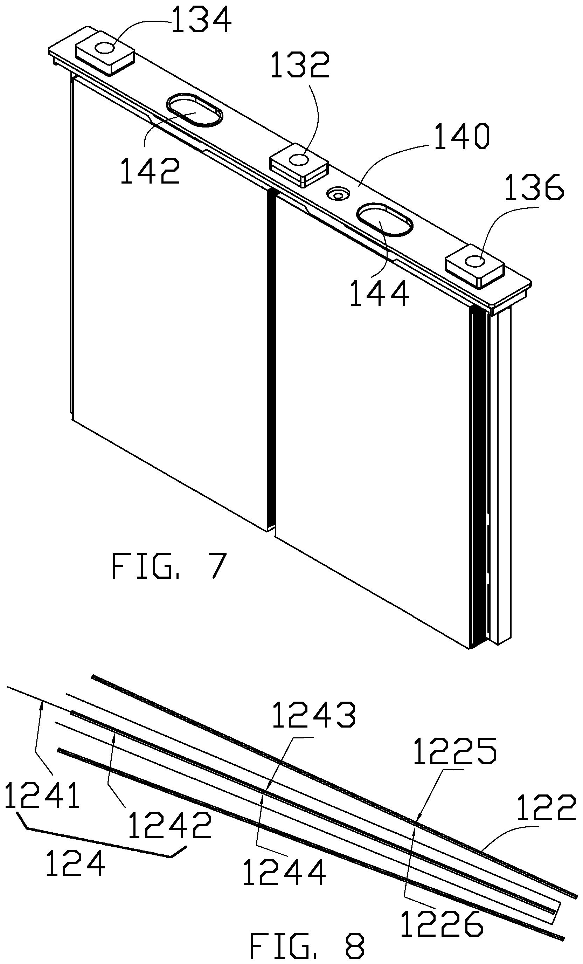

As shown in FIG. 3, the first electrode 122 includes a first empty-foil area 1221 and a first coating area 1222. The first coating area 1222 is divided into two independent parts 1223, 1224 by corresponding first empty-foil area 1221, and the first empty-foil area 1221 is disposed in the middle of the first electrode 122. In one embodiment, the first coating area 1222 is divided into two identical parts 1223 and 1224 by the first empty-foil area 1221. Further, as shown in FIG. 8, regarding one of the first coating area 1222, both sides of the first electrode 122, i.e., an upper side 1225 and a lower side 1226, are symmetrically arranged. In other words, both the upper side 1225 and the lower side 1226 are coated with first electrode slurry symmetrically. Meanwhile, as shown in FIG. 2, regarding the first empty-foil area 1221, it is symmetrically arranged, that is, neither side of the first electrode 122 at the first empty-foil area 1221 is coated.

As shown in FIGs. 2, 4 and 8, the second electrode 124 includes a second empty-foil area 1241 and a second coating area 1242. Further, the second empty-foil area 1241 and the second coating area 1242 are distributed along a lateral direction of the second electrode 124. As shown in FIGs. 2 and 8, the second empty-foil area 1241 is disposed at outer end of the second electrode 124 away from the first empty-foil area 1221. Regarding the second coating area 1242, two opposite sides of the second coating area 1242 are symmetrically coated, for example with second electrode slurry, the two opposite sides refers to an upper side 1243 and a lower side 1244 of the second electrode 124 as shown in FIG. 8. In other words, both the upper side 1243 and the lower side 1244 of the second electrode 124 at the second coating area 1242 are applied, such as with second electrode slurry. Meanwhile, regarding the second empty-foil area 1241, both sides of the second electrode 124 at the second empty-foil area 1241 are symmetrically arranged, i.e., both the upper side 1243 and the lower side 1244 at the second empty-foil area 1241 remain uncoated symmetrically.

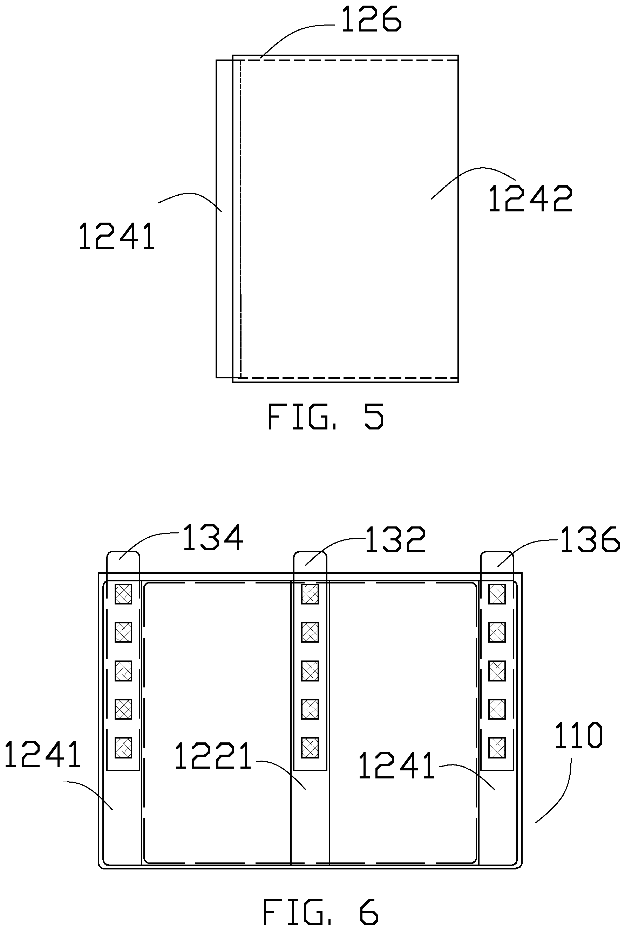

As shown in FIGs. 5 and 8, the separator 126 covers the surface of the second coating area 1242. Meanwhile, the separator 126 is folded and surrounds the second coating area 1242 for at least one round forming an annular structure, and the second coating area 1242 is accommodated therein.

As shown in FIGs. 2 and 6, the battery 100 includes at least two first electrodes 122 laminated together. The laminated first electrodes 122 are connected at the first empty-foil area 1221, for example in a way of welding, and are further electrically connected to a first electrode terminal 132 of the battery. As shown in FIG. 3, with regard to one single first electrode 122, two parts of the coating areas 1222 are mounted at opposite sides of the first empty-foil area 1221; further, the battery 100 includes at least two adjacent first electrodes 122 and two second electrodes 124, wherein the two second electrodes 124 are separately sandwiched between two first electrodes 122 and located at both sides of the first empty-foil areas 1221 separately.

As shown in FIGs. 2, 5, 6 and 8, the second empty-foil areas 1241 at one side of the first empty-foil area 1221 are connected together, for example by welding, and further electrically connected to a second electrode terminal 134 of the battery. The second empty-foil areas 1241 at the other side of the first empty-foil area 1221 are connected together, for example in a way of welding, and further electrically connected to a third electrode terminal 136 of the battery. In one embodiment, the first electrode 122 is a negative electrode, the second electrode 124 is a positive electrode, the first electrode terminal 132 is a negative terminal, both the second electrode terminal 134 and the third electrode terminal 136 are positive terminals.

As shown in FIGs. 1, 6 and 7, the case 110 is prismatic, which includes a top cover 140, the first electrode terminal 132, the second electrode terminal 134 and the third electrode terminal 136. The first electrode terminal 132, the second electrode terminal 134 and the third electrode terminal 136 are located on the top cover 140. The first electrode terminal 132 is electrically connected with the first empty-foil area 1221, the second electrode terminal 134 is electrically connected to the second empty-foil areas 1241 which locate at one side of the first empty-foil area 1221, the third electrode terminal 136 is electrically connected to the second empty-foil areas 1241 which locate at the other side of the first empty-foil area 1221. The first electrode terminal 132 is disposed between the second electrode terminal 134 and the third electrode terminal 136. A first explosion relief valve 142 is mounted between the first electrode terminal 132 and the second electrode terminal 134, a second explosion relief valve 144 is mounted between the first electrode terminal 132 and the third electrode terminal 136.

### Embodiment 2

As shown in FIGs. 1 and 2, a battery 100 is provided in this embodiment. The battery 100 includes a case 110 and several bare cells 120 located within the case 110. Each bare cell 120 includes a first electrode 122, a second electrode 124 and a separator 126, the separator126 is arranged between adjacent first electrode 122 and second electrode 124. Because of this, short circuit between the first electrode 122 and the second electrode 124 is prevented.

As shown in FIG. 3, the first electrode 122 includes a first empty-foil area 1221 and a first coating area 1222. The first coating area 1222 is divided into two independent parts 1223, 1224 by corresponding first empty-foil area 1221, and the first empty-foil area 1221 is disposed in the middle of the first electrode 122. In one embodiment, the first coating area 1222 is divided into two identical parts 1223 and 1224 by the first empty-foil area 1221.

As shown in FIGs. 2 and 4, the second electrode 124 includes a second empty-foil area 1241 and a second coating area 1242 adjacent thereto. Further, the second empty-foil area 1241 and the second coating area 1242 are distributed along a lateral direction of the second electrode 124. As shown in FIGs. 2 and 8, the second empty-foil area 1241 is disposed at outer end of the second electrode 124 away from the first empty-foil area 1221. The first electrode 122 is a positive electrode, the second electrode 124 is a negative electrode.

As shown in FIGs. 5 and 8, the separator 126 covers the surface of the second coating area 1242. Meanwhile, the separator 126 forms a pouch-like structure, and surrounded the second coating area 1242.

As shown in FIGs. 2 and 6, the battery 100 includes at least two first electrodes 122 laminated together. The laminated first electrodes 122 are connected at the first empty-foil area 1221, for example in a way of welding. Further, the battery 100 includes at least two second electrodes 124, and two second electrodes 124 are separately sandwiched between two adjacent first electrodes 122 and are located on both sides of the first empty-foil areas 1221.

As shown in FIGs. 2 and 5, the second empty-foil areas 1241 at one side of the first empty-foil area 1221 are connected together, for example in a way of welding. Meanwhile, the second empty-foil areas 1241 at the other side of the first empty-foil area 1221 are connected together, for example in a way of welding.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A battery (100), **characterized in that** the battery (100) comprises a case (110) and bare cells (120) located within the case (110), each bare cell (120) comprises a first electrode (122), a second electrode (124) and a separator (126),
each first electrode (122) comprises a first empty-foil area (1221) and a first coating area (1222), the first coating area (1222) is divided into two independent parts (1223, 1224) by the first empty-foil area (1221);
at least two first electrodes (122) are laminated and connected together at the first empty-foil areas (1221) thereof, two second electrodes (124) are sandwiched between adjacent two first electrodes (122) and located at either side of the first empty-foil areas (1221) separately;
the separator (126) is located between adjacent first electrode (122) and second electrode (124) such that short circuit between the first electrode (122) and the second electrode (124) is prevented.

2. The battery (100) according to claim **1**, wherein the at least two adjacent first electrodes (122) are laminated and connected together at the first empty-foil areas (1221) thereof by welding.

3. The battery (100) according to claim **1**, wherein the second electrode (124) comprises a second empty-foil area (1241) and a second coating area (1242), the second empty-foil area (1241) and the second coating area (1242) are distributed along a lateral direction or a longitudinal direction of the second electrode (124).

4. The battery (100) according to claim **3**, wherein the second coating area (1242) is symmetrically arranged on both sides of the second electrode (124); the second empty-foil area (1241) is symmetrically arranged on both sides of the second electrode (124).

5. The battery (100) according to claim **4**, wherein the second coating area (1242) is applied with slurry coating symmetrically on both sides of the second electrode (124); neither side of the second empty-foil area (1241) is applied with slurry coating.

6. The battery (100) according to claim **3**, wherein the second empty-foil areas (1241) at same side of the second electrodes (124) are connected together.

7. The battery (100) according to claim **6**, wherein the second electrodes (124) at one side of the connected first empty-foil areas (1221) are laminated together, the second empty-foil areas (1241) thereof are arranged at outer end of the second electrodes (124) and connected together by welding.

8. The battery (100) according to claim **6**, wherein the case (110) is a prismatic case, comprises a top cover (140), a first electrode terminal (132), a second electrode terminal (134) and a third electrode terminal (136), the first electrode terminal (132), the second electrode terminal (134) and the third electrode terminal (136) are arranged on the top cover (140), the first electrode terminal (132) is electrically connected to the first empty-foil areas (1221), the second electrode terminal (134) is electrically connected with the second empty-foil areas (1241) at one side of the first empty-foil areas (1221), the third electrode terminal (136) is electrically connected with the second empty-foil areas (1241) at the other side of the first empty-foil areas (1221).

9. The battery (100) according to claim **8**, wherein a first explosion relief valve (142) is located between the first electrode terminal (132) and the second electrode terminal (134), a second explosion relief valve (144) is located between the first electrode terminal (132) and the third electrode terminal (136).

10. The battery (100) according to claim **3**, wherein the separator (126) covers the surface of the second coating area (1242).

11. The battery (100) according to claim **10**, wherein the separator (126) surrounds the second coating area (1242) for at least one round; or, the separator (126) is a pouch-like structure and covers the second coating area (1242).

12. The battery (100) according to claim **1**, wherein the first coating area (1222) is symmetrically arranged on both sides (1225, 1226) of the first electrode (122); the first empty-foil area (1221) is symmetrically arranged on both sides of the first electrode (122).

13. The battery (100) according to claim **12**, wherein the first coating area (122) is applied with slurry coating symmetrically on both sides (1225, 1226) of the first electrode (122); neither side of the first empty-foil area (1221) is applied with slurry coating.

14. The battery (100) according to claim **1**, wherein the first empty-foil area (1221) is located in the middle of the first electrode (122), the first coating area (1222) is divided into two identical parts (1223, 1224) by the first empty-foil area (1221).

15. The battery (100) according to claim **1**, wherein the first electrode (122) is a negative electrode, the second electrode (124) is a positive electrode; or the first electrode (122) is a positive electrode, the second electrode (124) is a negative electrode.
